# EUROPÄISCHE PATENTANMELDUNG

(11) **EP 2 119 642 A1**
(43) Veröffentlichungstag der Anmeldung: **18.11.2009**
(21) Anmeldenummer: 08155614.4
(22) Anmeldetag: 02.05.2008
(51) Int. Cl.: B65G 1/04, B65G 1/137, A61J 7/00, G07F 11/04

(54) **Verfahren zum Lagern einer Vielzahl zylindrischer Behälter in einem automatisierten Regallager und dabei verwendeter Träger**

(71) Anmelder: Rowa Automatisierungssysteme GmbH, 53539 Kelberg (DE)
(72) Erfinder: Wingenter, Dirk, 54552 Mehren (DE)
(74) Vertreter: Bongards, Jochen

(57) **Zusammenfassung**

Zum Lagern zylindrischer Behälter (4) unterschiedlichen Inhalts in einem automatisierten Regallager mit ebenen Lagerflächen wird zunächst ein Träger (1) zur Aufnahme wenigstens eines Behälters (4) bereitgestellt, wobei der Träger (1) eine Auflagefläche (2) und ein an Abmessungen eines oder mehrerer Behälter angepasstes, offenes Aufnahmefach (3) aufweist. Der Träger ist derart ausgebildet, dass der Abstand des Schwerpunkts des mit wenigstens einem Behälter (4) beladenen Trägers von der Auflagefläche geringer als die Breite der Auflagefläche ist, so dass die Gefahr des Umkippens gering ist. Dann wird wenigstens ein Behälter (4) in das Aufnahmefach des Trägers eingelegt und eine Halteeinrichtung (5) derart in Eingriff gebracht, dass der Behälter in einer vorgegebenen Lage in dem Aufnahmefach (3) gehalten wird. Dann wird eine identifizierende Kennzeichnung des Behälters (4) erfasst und der Träger (1) mit Hilfe eines Bediengeräts ergriffen und an einem Lagerort auf einer Lagerfläche abgelegt, wobei die erfasste Kennzeichnung in Zuordnung zum Lagerort gespeichert wird.

## Beschreibung

Die Erfindung betrifft ein Verfahren zum Lagern einer Vielzahl zylindrischer Behälter unterschiedlichen Inhalts in einem automatisierten Regallager mit ebenen Lagerflächen unter Verwendung eines Trägers zur Aufnahme wenigstens eines zylindrischen Behälters sowie einen Träger zur Aufnahme eines zylindrischen Behälters oder einer vorgegebenen Anzahl zylindrischer Behälter zur Verwendung in einem solchen Verfahren.

Beispielsweise aus den Veröffentlichungen DE 195 09 951 C2, EP 0 620 528 A1, DE 297 15 820 U1, DE 199 55 615 C2 und DE 10 2004 007 694 A1 sind Verfahren zum Lagern einer Vielzahl quaderförmiger Arzneimittelpackungen unterschiedlichen Inhalts und unterschiedlicher Größe in einem automatisierten Regallager mit ebenen Lagerflächen bekannt. Die Packungen werden beispielsweise manuell an einer Aufgabestation (beispielsweise einem Ende eines Förderbands) von einem Bediener aufgelegt, anschließend vermessen und identifiziert (beispielsweise durch Lesen eines auf den quaderförmigen Packungen aufgedruckten Barcodes) und dann mit Hilfe eines Bediengeräts ergriffen und an einem Lagerort auf einer Lagerfläche des Regallagers abgelegt, wobei die erfasste Identifikation in Zuordnung zu dem Lagerort in einem Datenspeicher gespeichert wird. Auf diese Weise werden viele quaderförmige Packungen chaotisch auf ebenen Regalböden gelagert. Auf eine Anforderung hin wird eine bestimmte quaderförmige Packung ausgelagert, indem sie mit Hilfe des Bediengeräts ergriffen und zu einem Ausgabeplatz transportiert wird. Es sind grundsätzlich mehrere Arten von Greifeinrichtungen des Bediengeräts bekannt. Beispielsweise werden Backengreifer verwendet, die sich an die Seitenflächen der quaderförmigen Packungen andrücken und die Packungen dann anheben oder auf einen Tisch des Bediengeräts in waagerechter Richtung ziehen. Ferner sind sogenannte Sauggreifer bekannt, die einen Saugkopf aufweisen, der sich an eine ebene Stirnfläche der quaderförmigen Packungen ansaugt und dann die Packung waagerecht auf einen Transporttisch des Bediengeräts zieht.

Zylindrische Behälter (beispielsweise Flaschen oder Röhrchen) lassen sich auf diese Weise nicht lagern, weil sie bei liegender Ablage auf den ebenen Regalböden seitlich wegrollen können oder bei senkrechter Ablage auf ihrer kreisförmigen Grundfläche die Gefahr besteht, dass die Flaschen oder Röhrchen umkippen. Außerdem wäre es bei einer direkten Ein- und Auslagerung der zylinderförmigen Behälter erforderlich, den Saugkopf an das Ansaugen gekrümmter Oberflächen anzupassen. Selbstverständlich könnten zylinderförmige Behälter bei dem bekannten Regallager gelagert werden, indem sie in quaderförmigen Umverpackungen verpackt werden, wie dies bei einigen Arzneimitteln bereits der Fall ist. In diesem Fall umschließt die quaderförmige Umverpackung, das heißt die quaderförmige Schachtel, das zylindrische Röhrchen vollständig. Das vollständige Umschließen durch die quaderförmige Schachtel ist unter anderem deshalb erforderlich, damit die aus einem relativ dünnen Pappmaterial bestehende Schachtel formstabil bleibt, wenn entweder ein Saugkopf an ihre Stirnfläche angreift oder die beiden Backen eines Backengreifers auf die Seitenflächen drücken. Die geschlossene Schachtel hat jedoch den Nachteil, dass eine Entnahme der Röhrchen relativ aufwendig ist, so dass diese Umverpackungen regelmäßig zusammen mit den Röhrchen abgegeben und nicht wiederverwendet werden. Eine Verwendung oben offener Schachteln, aus denen einzelne Röhrchen manuell entnommen werden könnten, scheitert an deren Formstabilität beim Zugriff des Bediengeräts.

Aufgabe der Erfindung ist es daher, eine automatisierte Lagerung einer Vielzahl zylindrischer Behälter unterschiedlichen Inhalts in einem Regallager mit ebenen Lagerflächen auf einfache, aber dennoch sichere Weise zu ermöglichen.

Diese Aufgabe wird erfindungsgemäß durch ein Verfahren mit dem Merkmalen des Anspruchs 1 beziehungsweise einen Träger zur Aufnahme eines zylindrischen Behälters oder einer vorgegebenen Anzahl zylindrischer Behälter mit den Merkmalen des Anspruchs 8 gelöst.

Kerngedanke der Erfindung ist die Bereitstellung eines Trägers mit einer an die Ablage auf ebenen Lagerflächen angepassten Auflagefläche, mit einem an Abmessungen eines zylindrischen Behälters (oder mehrerer zylindrischer Behälter) angepassten offenen Aufnahmefach, mit einer an dem Aufnahmefach angeordneten Halteeinrichtung zum Festhalten des einliegenden Behälters beim Transport und mit einer gegenüber der Auflagefläche senkrechten frontalen ebenen Ansaugfläche, die zum Ansetzen eines Sauggreifer geeignet ist und/oder zwei einander gegenüberliegend und gegenüber der Auflagefläche senkrecht angeordneten Seitenflächen, die zum Ansetzen eines Backengreifers geeignet sind, wobei eine biegesteife Verbindung zwischen der Ansaugfläche beziehungsweise den Seitenflächen und dem offenen Aufnahmefach besteht, so dass sich Gestalt und Lage der Ansaugfläche beziehungsweise der Seitenflächen beim Greifen und Anheben des Trägers nicht verändern. Die Auflagefläche kann eine durchgehende ebene Oberfläche des Trägermaterials, aber auch eine von den Stirnflächen mehrerer Querstege gebildete Auflage sein. Unter dem offenen Aufnahmefach soll hier auch jede Auflage verstanden werden, die den Behälter in einer bestimmten Lage ortsfest hält, beispielsweise auch eine an die Länge des zylindrischen Behälter angepasste Nut oder V-förmige Vertiefung oder mehrere an den Durchmesser des zylindrischen Behälters angepasste nach oben ragende Pfosten oder Anschläge. Die Halteeinrichtung hält den Behälter derart, dass er gegen ein Verrutschen oder Herunterfallen vom Träger während des Transports und der Lagerung gesichert ist.

Dieser formstabile, nach oben offene und den Behälter haltende Träger gestattet ein Verfahren zum Lagern einer Vielzahl zylindrischer Behälter unterschiedlichen Inhalts in einem automatisierten Regallager mit ebenen Lagerflächen, dass erfindungsgemäß die folgenden Schritte umfasst.

Zunächst wird ein Träger zur Aufnahme wenigstens eines zylindrischen Behälters bereitgestellt, wobei der Träger eine Auflagefläche und ein an Abmessungen eines zylindrischen Behälters oder mehrerer zylindrischer Behälter angepasstes, offenes Aufnahmefach aufweist, wobei der Träger derart ausgebildet ist, dass der Abstand des Schwerpunkts des mit wenigstens einem Behälter beladenen Trägers von der Auflagefläche geringer als die Breite der Auflagefläche ist, so dass die Gefahr des Umkippens eines beladenen Trägers gering ist. Dann wird wenigstens ein Behälter in das Aufnahmefach des Trägers eingelegt (beispielsweise manuell) und eine Halteeinrichtung derart in Eingriff gebracht wird, dass der Behälter in einer vorgegebenen Lage in dem Aufnahmefach gehalten wird. Dann wird eine identifizierende Kennzeichnung des Behälters erfasst und der Träger mit Hilfe eines Bediengeräts ergriffen und an einem Lagerort auf einer Lagerfläche des Regallagers abgelegt, wobei die erfasste identifizierende Kennzeichnung des Behälters in Zuordnung zu den Lagerort kennzeichnenden Daten gespeichert wird. Diese Schritte werden für eine Mehrzahl von Trägern mit Behälter wiederholt (wobei die Schritte für mehrere Träger auch parallel oder überlappend ausgeführt werden können).

Auf eine Anforderung hin wird ein beladener Träger mit einem bestimmten einliegenden Behälter ausgelagert, indem der Träger mit Hilfe des Bediengeräts ergriffen wird, wobei entweder ein Saugkopf eines Sauggreifers an eine frontal und im Wesentlichen senkrecht angeordnete und biegesteif mit dem Aufnahmefach verbundene, ebene Ansaugfläche des Trägers angreift oder zwei Greifbacken eines Backengreifers an zwei einander gegenüberliegend und im Wesentlichen senkrecht angeordnete und biegesteif mit dem Aufnahmefach verbundene Seitenflächen des Trägers angreifen. Der beladene Träger wird zu einem Ausgabeplatz transportiert. Dann wird der zylindrische Behälter dem Aufnahmefach entnommen (beispielsweise manuell).

Der Träger steht anschließend für eine erneute Verwendung zur Einlagerung eines Behälters bereit.

Die identifizierende Kennzeichnung des Behälters kann beispielsweise automatisch oder manuell erfasst werden. Sie braucht nicht am Behälter befestigt zu sein, sie kann auch lediglich einer Verpackung des einzulagernden Behälters zugeordnet sein, aus der er entnommen wird. Vorzugsweise ist die identifizierende Kennzeichnung jedoch in Form eines Aufdrucks (zum Beispiel Barcodes) oder eines RFID am Behälter befestigt.

Bei einer bevorzugten Ausführungsform weist der Träger ein Aufnahmefach für genau einen zylindrischen Behälter auf, so dass jeweils genau ein Behälter eingelagert wird. Dies gestattet eine höhere Flexibilität. Bevorzugt ist auch eine Ausführungsform, bei der der Träger lediglich eine stirnseitige Ansaugfläche aufweist und keine Seitenflächen zum Angreifen eins Backengreifers. Dies gestattet eine dichtere Lagerung der beladenen Träger und eine bessere Lagerraumausnutzung.

Bei einer bevorzugten Ausführungsform wird die Halteeinrichtung beim Einlegen des Behälters selbsttätig in Eingriff gebracht. Beispielsweise erfolgt bei einem manuellen Einlegevorgang ein automatisches Einklemmen, entweder durch Umklammern der Zylindermantelfläche oder durch Andrücken von Klammern an die einander gegenüberliegenden Stirnflächen.

Bei einer bevorzugten Ausführungsform, bei der die identifizierende Kennzeichnung, beispielsweise als Barcode, auf der Mantelfläche des Behälters aufgebracht ist, wird der Behälter nach dem Einlegen vorzugsweise so lange gedreht (zum Beispiel manuell), bis die identifizierende Kennzeichnung sichtbar und beispielsweise an einer vorgegebenen Position angeordnet ist.

Der erfindungsgemäße Träger zur Aufnahme eines zylindrischen Behälter oder einer vorgegebenen Anzahl zylindrischer Behälter zur Verwendung in dem genannten erfindungsgemäßen Verfahren weist eine die Trägerunterseite bildende Auflagefläche, ein an Abmessungen des zylindrischen Behälters oder der zylindrischen Behälter angepasstes, offenes Aufnahmefach, eine an dem Aufnahmefach angeordnete Halteeinrichtung zum Festhalten des in dem Aufnahmefach einliegenden Behälters beziehungsweise der in dem Aufnahmefach einliegenden Behälter und eine gegenüber der Auflagefläche senkrechte frontale ebene Ansaugfläche, die zum Ansetzen eine Sauggreifers geeignet ist, und/oder zwei einander gegenüberliegend und gegenüber der Auflagefläche senkrecht angeordnete Seitenflächen, die zum Ansetzen eines Backengreifers geeignet sind, auf. Dabei besteht eine biegesteife Verbindung zwischen der Ansaugfläche beziehungsweise den Seitenflächen und dem offenen Aufnahmefach derart, dass sich Gestalt und Lage der Ansaugfläche beziehungsweise der Seitenflächen beim Greifen und Anheben des Trägers nicht verändern. Unter einer Gestaltsveränderung soll hier eine Durchbiegung oder Krümmung oder andere Deformation der Ansaugfläche beziehungsweise der Seitenflächen verstanden werden, während unter einer Lageveränderung eine relative Lageänderung gegenüber dem Aufnahmefach, beispielsweise ein Ankippen, verstanden werden soll. Der erfindungsgemäße Träger ist ferner derart ausgebildet, dass der Abstand des Schwerpunkts des mit wenigstens einem Behälter beladenen Trägers von der Auflagefläche geringer als die Breite der Auflagefläche ist, so dass die Gefahr des Umkippens eines beladenen Trägers gering ist. Vorzugsweise ist der Träger derart ausgebildet, dass der Abstand des Schwerpunkts des beladenen Trägers von der Auflagefläche geringer als der Abstand der Normalen durch den Schwerpunkt vom Rand der Auflagefläche ist.

Das offene Aufnahmefach ist vorzugsweise oben offen und nimmt vorzugsweise den zylindrischen Behälter in horizontaler Lage auf. Vorzugsweise ist das Aufnahmefach für genau einen zylindrischen Behälter vorgesehen. Dies gestattet eine höhere Flexibilität der Lagerung. Bei einer Ausführungsform ist das Aufnahmefach durch eine V-förmige Vertiefung (Nut) gebildet. Vorzugsweise erstreckt sich die Nut senkrecht zur stirnseitigen Ansaugfläche. Die an dem Aufnahmefach angeordnete Halteeinrichtung zum Festhalten des Behälters umfasst vorzugsweise eine die Mantelfläche des zylindrischen Behälters teilweise umgreifende Klammer. Bei einer alternativen Ausführungsform umfasst die an dem Aufnahmefach angeordnete Halteeinrichtung zum Festhalten des Behälters ein gegen eine Stirnfläche des zylindrischen Behälters drückendes Federelement und einen an der anderen Stirnfläche anliegenden Anschlag. Bei dieser Ausführungsform ist vorzugsweise nicht die gesamte Oberseite des Behälters offen, sondern umfasst die Halteeinrichtung ferner einen die Mantelfläche in einem schmalen axialen Abschnitt umgreifenden Steg, wobei der Steg in der Nähe eines der beiden Enden des zylindrischen Behälters angeordnet ist. Eine derartige Halteeinrichtung ist beispielsweise bei Aufnahmefächern für Batterien bekannt.

In bevorzugter Ausführung ist der Träger **dadurch gekennzeichnet, dass** er einstückig aus einem Kunststoffmaterial gefertigt ist. Vorzugsweise wird er im Spritzgussverfahren hergestellt.

Vorteilhafte und/oder bevorzugte Weiterbildungen der Erfindung sind in den Unteransprüchen gekennzeichnet.

Im Folgenden wird die Erfindung anhand eines in der Zeichnung dargestellten bevorzugten Ausführungsbeispiels näher beschrieben. In der Zeichnung zeigen:
Figur 1 eine schematische Perspektivansicht eines Ausführungsbeispiels eines erfindungsgemäßen Trägers;
Figur 2 eine schematische Perspektivansicht eines erfindungsgemäßen Trägers der in Figur 1 gezeigten Art, der mit einem zylindrischen Behälter beladen ist; und
Figur 3 eine schematische Perspektivansicht einer alternativen Ausführungsform des erfindungsgemäßen Trägers.

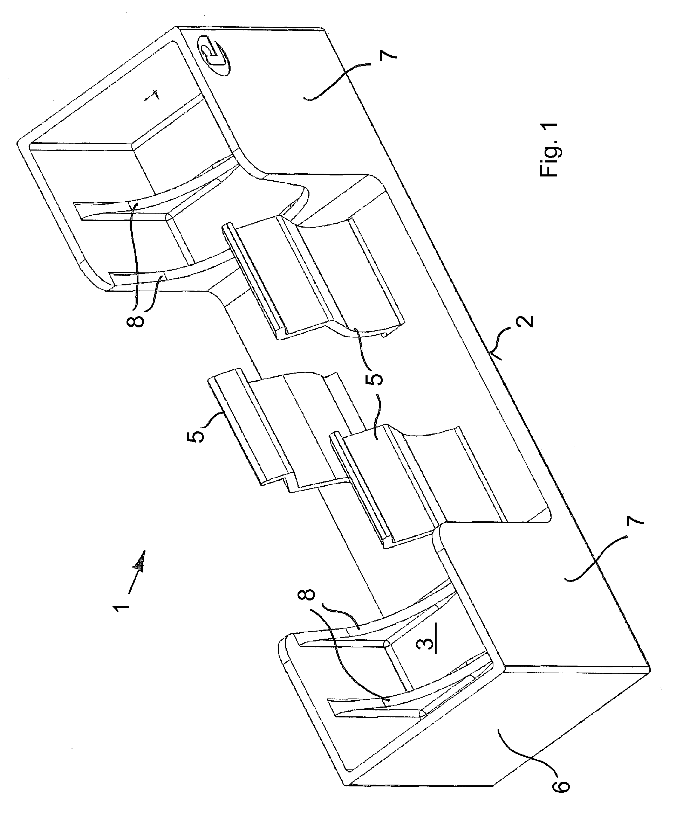

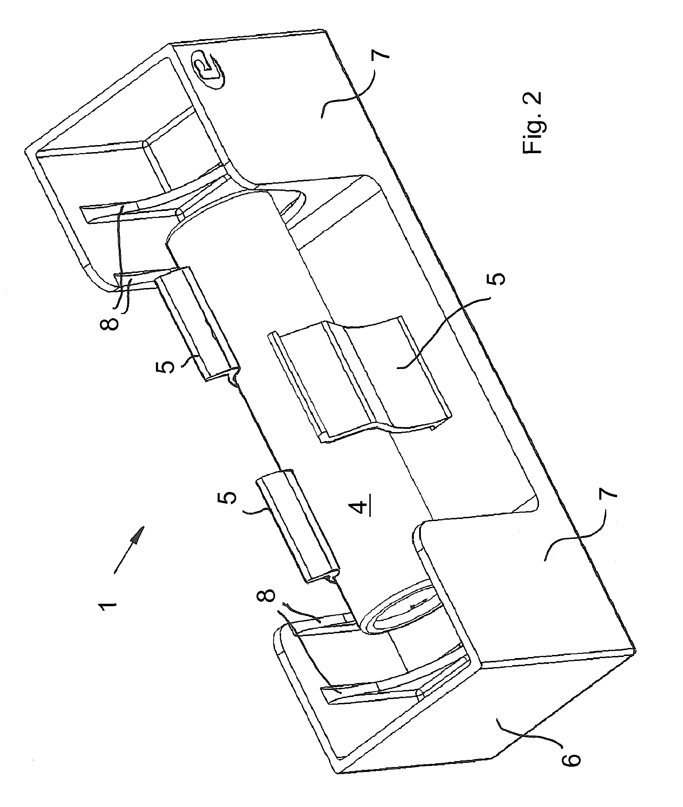

Figur 1 zeigt eine schematische Perspektivansicht einer bevorzugten Ausführungsform eines erfindungsgemäßen Trägers 1 zur Aufnahme eines zylindrischen Behälters, beispielsweise eines zur Aufnahme homöopathischer Medikamente dienenden Röhrchens. In Figur 1 ist der leere, unbeladene Träger 1 gezeigt. Figur 2 zeigt eine andere schematische Perspektivansicht, bei der ein Träger der in Figur 1 gezeigten Art mit einem Röhrchen 4 beladen ist.

Der Träger 1, der beispielsweise in einem Spritzgussverfahren aus Kunststoff hergestellt ist, weist an seiner Unterseite eine Auflagefläche 2 auf. Ferner weist der Träger 1 ein Aufnahmefach 3 auf, welches offen ist und an die Abmessungen eines aufzunehmenden zylindrischen Behälters angepasst ist. Bei dem in Figur 1 dargestellten Ausführungsbeispiel wird das Aufnahmefach 3 von Wandungen gebildet, die sich ausgehend von einer die Auflagefläche 2 aufweisenden Trägerplatte senkrecht nach oben erstrecken und zwischen sich das nach oben offene Aufnahmefach 3 definieren. In dem Aufnahmefach 3 sind bei der Ausführungsform nach Figur 1 Querstege 8 ausgebildet, auf deren nach oben weisenden, bogenförmig oder V-förmig konkav verlaufenden Stirnflächen ein Behälter 4 aufliegt, wenn er in das Aufnahmefach 3 eingelegt ist (siehe Figur 2). Neben den Auflagen bildenden Querstegen 8 umfasst die in dem Aufnahmefach angeordnete Halteeinrichtung zum Festhalten des in dem Aufnahmefach einliegenden Behälters 4 Halteklammern 5, die am Boden des Trägers 1 befestigt sind und derart versetzt einander gegenüberliegend angeordnet sind, dass sie sich bei einliegendem Behälter 4 an dessen Mantelflächen andrücken. Bei der in den Figuren 1 und 2 dargestellten Ausführungsform des erfindungsgemäßen Trägers 1 sind jeweils drei derartige Halteklammern 5 vorgesehen, wobei von einer Seite eine Halteklammer an die Wandung des Behälters 4 drückt und von der gegenüberliegenden Seite versetzt zwei Halteklammern dagegen drücken. Der Träger 1 weist Seitenwandungen mit nach außen weisenden ebenen Seitenflächen 7 auf, wobei die Seitenwandungen im Bereich der versetzt angeordneten Halteklammern 5 derart ausgeschnitten sind, dass ein Bediener leicht den im Aufnahmefach 3 einliegenden und von den Halteklammern 5 gehaltenen Behälter 4 manuell ergreifen kann.

Die Außenwandung des Trägers 1 bildet an den Stirnflächen jeweils eine gegenüber der Auflagefläche 2 senkrechte, frontale ebene Ansaugfläche 6, die zum Ansetzen eines Sauggreifers geeignet ist. Bei der Ausführungsform gemäß den Figuren 1 und 2 bilden die Seitenwandungen des Trägers 1 zwei einander gegenüberliegend und gegenüber der Auflagefläche 2 senkrecht angeordnete Seitenflächen 7, die zum Ansetzen eines Backengreifers geeignet sind. Die Seitenflächen 7 sind bei dem gezeigten Ausführungsbeispiel durch eine Ausnehmung im Bereich der Halteklammern 5 unterbrochen.

Zwischen der die Auflagefläche 2 aufweisenden Bodenwandung des Trägers 1 und den senkrecht sich nach oben erstreckenden Außenwandungen und somit den Ansaugflächen 6 beziehungsweise den Seitenflächen 7 besteht eine biegesteife Verbindung, so dass sich Gestalt und Lage der Ansaugfläche beziehungsweise der Seitenflächen beim Greifen und Anheben des Trägers 1 durch die einwirkenden Kräfte nicht verändern. Der Träger 1 ist ferner so ausgebildet, dass der Abstand des Schwerpunkts des mit wenigstens einem Behälter beladenen Trägers von der Auflagefläche 2 geringer als die Breite der Auflagefläche ist, so dass die Gefahr des Umkippens eines beladenen Trägers gering ist.

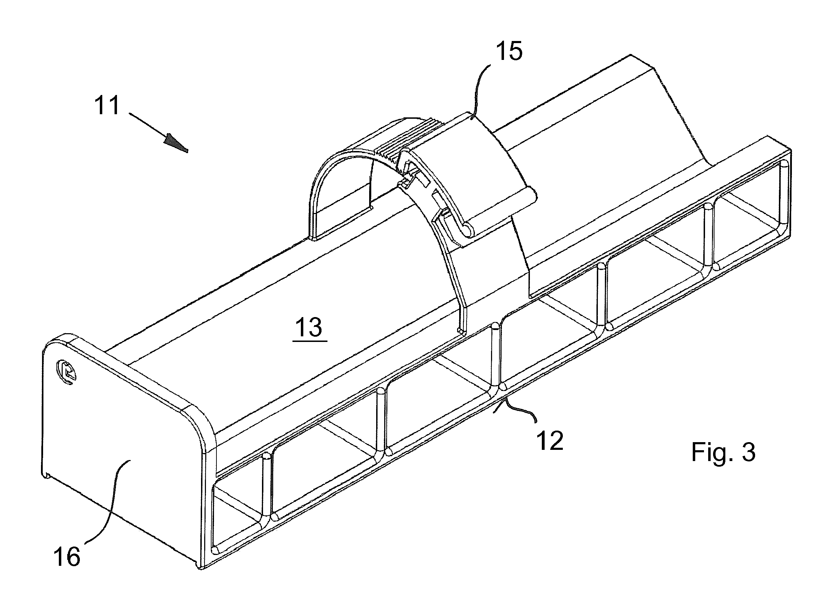

Figur 3 zeigt eine alternative Ausführungsform des erfindungsgemäßen Trägers. Der in Figur 3 gezeigte Träger 11 weist ebenfalls eine Auflagefläche 12 auf, die von einer Bodenwandung des Trägers 11 gebildet ist. Ein Aufnahmefach 13 wird durch eine V-förmige Vertiefung (Nut) gebildet, die sich in Längsrichtung des Trägers 11 erstreckt. Die einen (in Figur 3 nicht gezeigten) einliegenden Behälter beim Transport des Trägers 11 festhaltende Halteeinrichtung wird durch eine Schnalle 15 gebildet. An einer Stirnseite des Trägers 11 ist eine gegenüber der Auflagefläche 12 senkrechte, ebene Ansaugfläche 16 ausgebildet, die zum Ansetzen eines Sauggreifers geeignet ist. Zwischen dieser Ansaugfläche 16 und der Auflagefläche 12 sowie dem durch die V-förmige Vertiefung gebildeten Aufnahmefach 13 besteht eine biegesteife Verbindung, so dass sich die Gestalt des Trägers 11 beim Sauggreifen und Anheben des Trägers nicht verändert.

Selbstverständlich kann bei dem in Figur 3 dargestellten Träger 11 die Schnalle 15 auch durch Halteklammern ersetzt werden, wie sie beispielsweise bei dem in Figur 1 dargestellten Ausführungsbeispiel verwendet werden. Anstelle von Halteklammern, die auf die Mantelflächen des zylindrischen Behälters 4 drücken, können auch Halteklammern verwendet werden, die sich an die Stirnflächen des Behälters andrücken.

Um eine Vielzahl zylindrischer Behälter, beispielsweise von Röhrchen zur Aufnahme homöopathischer Arzneimittel, in einem automatisierten Regallager mit ebenen Lagerflächen zu lagern, werden die Behälter zunächst in die Träger eingelegt, beispielsweise manuell. Dann wird eine identifizierende Kennzeichnung des Behälters, beispielsweise ein auf dem Behälter aufgebrachter Barcode, erfasst und der Träger automatisch mit Hilfe eines Bediengeräts ergriffen und an einen Lagerort auf einer Lagerfläche des Regallagers abgelegt. Dabei wird die erfasste identifizierende Kennzeichnung des Behälter in Zuordnung zu den Lagerort kennzeichnenden Daten gespeichert. Auf eine Anforderung hin wird ein beladender Träger mit einem bestimmten einliegenden Röhrchen ausgelagert, indem der Träger mit Hilfe des Bediengeräts ergriffen wird, wobei ein Saugkopf an eine frontale Ansaugfläche des Trägers angreift. Der beladene Träger wird zu einem Ausgabeplatz transportiert. Anschließend wird der zylindrische Behälter dem Aufnahmefach entnommen, so dass der Träger wieder für die Einlagerung desselben oder eines anderen Behälters zur Verfügung steht.

## Patentansprüche

1. Verfahren zum Lagern einer Vielzahl zylindrischer Behälter (4) unterschiedlichen Inhalts in einem automatisierten Regallager mit ebenen Lagerflächen, wobei:
a) ein Träger (1; 11) zur Aufnahme wenigstens eines zylindrischen Behälters (4) bereitgestellt wird, wobei der Träger (1; 11) eine Auflagefläche (2; 12) und ein an Abmessungen eines zylindrischen Behälters oder mehrerer zylindrischer Behälter angepasstes, offenes Aufnahmefach (3; 13) aufweist, wobei der Träger derart ausgebildet ist, dass der Abstand des Schwerpunkts des mit wenigstens einem Behälter beladenen Trägers von der Auflagefläche geringer als die Breite der Auflagefläche ist, so dass die Gefahr des Umkippens eines beladenen Trägers gering ist,
b) wenigstens ein Behälter in das Aufnahmefach des Trägers eingelegt und eine Halteeinrichtung (5,8; 15) des Trägers derart in Eingriff gebracht wird, dass der Behälter in einer vorgegebenen Lage in dem Aufnahmefach gehalten wird,
c) eine identifizierende Kennzeichnung des Behälters erfasst und der Träger mit Hilfe eines Bediengeräts ergriffen und an einem Lagerort auf einer Lagerfläche des Regallagers abgelegt wird, wobei die erfasste identifizierende Kennzeichnung des Behälters in Zuordnung zu den Lagerort kennzeichnenden Daten gespeichert wird,
d) die Schritte a), b) und c) für eine Mehrzahl von Trägern mit Behältern wiederholt werden,
e) auf eine Anforderung hin ein beladener Träger mit einem bestimmten einliegenden Behälter ausgelagert wird, indem der Träger mit Hilfe des Bediengeräts ergriffen wird, wobei entweder ein Saugkopf eines Sauggreifers an eine frontal und im wesentlichen senkrecht angeordnete und biegesteif mit dem Aufnahmefach verbundene, ebene Ansaugfläche (6; 16) des Trägers angreift oder zwei Greifbacken eines Backengreifers an zwei einander gegenüberliegend und im wesentlichen senkrecht angeordnete und biegesteif mit dem Aufnahmefach verbundene Seitenflächen (7) des Trägers angreifen, und der beladene Träger zu einem Ausgabeplatz transportiert wird, und
f) der zylindrische Behälter dem Aufnahmefach entnommen wird.

2. Verfahren nach Anspruch 1, **dadurch gekennzeichnet, dass** der Träger ein Aufnahmefach für genau einen zylindrischen Behälter aufweist, so dass im Schritt b) genau ein Behälter eingelegt wird.

3. Verfahren nach Anspruch 2, **dadurch gekennzeichnet, dass** die Halteeinrichtung beim Einlegen des Behälters selbsttätig in Eingriff gebracht wird.

4. Verfahren nach Anspruch 3, **dadurch gekennzeichnet, dass** der Behälter im Schritt b) manuell eingelegt wird.

5. Verfahren nach Anspruch 4, **dadurch gekennzeichnet, dass** der Behälter im Schritt f) manuell entnommen wird.

6. Verfahren nach einem der Ansprüche 2 bis 5, **dadurch gekennzeichnet, dass** im Schritt c) eine auf der Mantelfläche des zylindrischen Behälters aufgebrachte identifizierende Kennzeichnung des Behälters, beispielsweise ein Barcode, erfasst wird.

7. Verfahren nach Anspruch 6, **dadurch gekennzeichnet, dass** der Behälter im Schritt b) nach dem Einlegen solange gedreht wird, bis die identifizierende Kennzeichnung des Behälters sichtbar ist, sofern dies erforderlich ist.

8. Träger (1; 11) zur Aufnahme eines zylindrischen Behälters (4)oder einer vorgegebenen Anzahl zylindrischer Behälter zur Verwendung in einem Verfahren nach Anspruch 1, aufweisend:
eine die Trägerunterseite bildende Auflagefläche (2; 12),
ein an Abmessungen des zylindrischen Behälters (4) oder der zylindrischen Behälter angepasstes, offenes Aufnahmefach (3; 13),
eine an dem Aufnahmefach angeordnete Halteeinrichtung (5,8; 15) zum Festhalten des in dem Aufnahmefach einliegenden Behälters beziehungsweise der in dem Aufnahmefach einliegenden Behälter und
eine gegenüber der Auflagefläche (2; 12) senkrechte frontale ebene Ansaugfläche (6; 16), die zum Ansetzen eines Sauggreifers geeignet ist, und/oder zwei einander gegenüberliegend und gegenüber der Auflagefläche senkrecht angeordnete Seitenflächen (7), die zum Ansetzen eines Backengreifers geeignet sind, wobei eine biegesteife Verbindung zwischen der Ansaugfläche (6; 16) beziehungsweise den Seitenflächen (7) und dem offenen Aufnahmefach (3; 13) besteht, so dass sich Gestalt und Lage der Ansaugfläche beziehungsweise der Seitenflächen beim Greifen und Anheben des Trägers nicht verändern,
wobei der Träger derart ausgebildet ist, dass der Abstand des Schwerpunkts des mit wenigstens einem Behälter beladenen Trägers von der Auflagefläche geringer als die Breite der Auflagefläche ist, so dass die Gefahr des Umkippens eines beladenen Trägers gering ist.

9. Träger nach Anspruch 8, **dadurch gekennzeichnet, dass** das Aufnahmefach (3; 13) oben offen ist.

10. Träger nach Anspruch 9, **dadurch gekennzeichnet, dass** das Aufnahmefach (3; 13) den zylindrischen Behälter (4) in horizontaler Lage aufnimmt.

11. Träger nach Anspruch 10, **dadurch gekennzeichnet, dass** der Träger (1; 11) ein Aufnahmefach (3; 13) für genau einen zylindrischen Behälter aufweist.

12. Träger nach Anspruch 11, **dadurch gekennzeichnet, dass** das Aufnahmefach (13) durch eine V-förmige Vertiefung gebildet wird.

13. Träger nach Anspruch 12, **dadurch gekennzeichnet, dass** der Träger derart ausgebildet ist, dass der Abstand des Schwerpunkts des mit wenigstens einem Behälter beladenen Trägers von der Auflagefläche geringer als der Abstand der Normalen durch den Schwerpunkt vom Rand der Auflagefläche ist.

14. Träger nach einem der Ansprüche 8 bis 13, **dadurch gekennzeichnet, dass** die an dem Aufnahmefach angeordnete Halteeinrichtung zum Festhalten des Behälters (4) eine die Mantelfläche des zylindrischen Behälters teilweise umgreifende Klammer (5) umfasst.

15. Träger nach einem der Ansprüche 8 bis 13, **dadurch gekennzeichnet, dass** die an dem Aufnahmefach angeordnete Halteeinrichtung zum Festhalten des Behälters ein gegen eine Stirnfläche des zylindrischen Behälters drückendes Federelement und einen an der anderen Stirnfläche anliegenden Anschlag umfasst.

16. Träger nach Anspruch 15, **dadurch gekennzeichnet, dass** die Halteeinrichtung zum Festhalten des Behälters ferner einen die Mantelfläche in einem schmalen axialen Abschnitt umgreifenden Steg umfasst, wobei der Steg in der Nähe eines der beiden Enden des zylindrischen Behälters angeordnet ist.

17. Träger nach einem der Ansprüche 8 bis 16, **dadurch gekennzeichnet, dass** er einstückig aus einem Kunststoffmaterial gefertigt ist.
